# FASCICULE DE BREVET EUROPEEN

(11) **EP 0 399 865 B1**
(45) Date de publication et mention de la délivrance du brevet: **13.04.1994**
(21) Numéro de dépôt: 90401211.9
(22) Date de dépôt: 07.05.1990
(51) Int. Cl.: G02B 27/00

(54) **Dispositif optique pour l'introduction d'une image collimatée dans le champ visuel d'un observateur, et casque comportant au moins un tel dispositif**
Optisches Gerät zur Einspiegelung eines kollimierten Bildes in das Sichtfeld eines Beobachters und Helm mit einem derartigen Gerät
Optical device for introduction of a collimated image into the field of view of an observer and helmet comprising such a device

(30) Priorité: 23.05.1989 FR 8906721
(43) Date de publication de la demande: 28.11.1990
(73) Titulaire: THOMSON-CSF, 75008 Paris (FR)
(72) Inventeur: Migozzi, Jean-Blaise, F-92045 Paris la Défense (FR)
(74) Mandataire: Courtellemont, Alain

(56) Documents cités:
- GB-A- 2 022 285
- US-A- 4 099 841
- US-A- 4 361 384
- US-A- 4 711 512

## Description

La présente invention concerne un dispositif optique qui permet à un observateur de regarder simultanément ce qui se trouve normalement dans son champ visuel et une image collimatée, par introduction de cette image dans son champ visuel à l'aide d'une optique de combinaison comportant au moins un miroir semi-réfléchissant. Il est à noter que les termes "image collimatée" signifient, dans ce texte, image se formant à l'infini et que le fait de fournir à l'observateur une image collimatée, lui évite d'avoir à accommoder de façons différentes et donc à se fatiguer la vue quand il fixe son attention sur le paysage et quand il la fixe sur l'image. L'invention concerne également des casques équipés de dispositifs optiques pour l'introduction d'une image dans le champ visuel d'un observateur.

De tels dispositifs optiques existent ; ils sont, en particulier, utilisés en aéronautique pour fournir, par exemple, des informations de pilotage à un pilote sans qu'il ait à quitter des yeux le paysage.

Les dispositifs connus présentent divers inconvénients : aberrations optiques dans les dispositifs où des miroirs paraboliques travaillent hors d'axe, image de qualité médiocre et dispositif volumineux et lourd à moins de limiter assez fortement le champ visuel.

Ainsi, dans le document SPIE, volume 778, Display System Optics (1987), pages 83 à 88, un article de James E. MELZER et Eric W. LARKIN, intitulé "An integral approach to helmet display system design", décrit un dispositif optique monté sur un casque et comportant : un générateur d'une image lumineuse synthétique à collimater, un objectif de collimation du rayonnement lumineux correspondant à l'image synthétique, et une optique de combinaison composée d'un montage afocal de deux miroirs paraboliques, un premier miroir réfléchissant le rayonnement de l'image collimatée vers le deuxième miroir lequel est partiellement réfléchissant pour réfléchir ce rayonnement vers l'observateur et permettre simultanément la transmission du rayonnement provenant de l'extérieur et compris dans le champ du dispositif. En outre, le dispositif optique comporte un certain nombre de miroirs de renvoi pour dévier le trajet optique et permettre le montage sur casque. Dans ce dispositif optique connu, les miroirs paraboliques travaillent hors d'axe ce qui est cause d'aberrations et diminue la qualité de l'image.

Ce dispositif a été amélioré en utilisant une lame transparente à faces parallèles dont les deux extrémités constituent les deux miroirs paraboliques ; le rayonnement collimaté traverse une des faces parallèles de la lame, atteint le premier miroir puis le second après plusieurs réflexions totales à l'intérieur de la lame, puis ressort de la lame vers la pupille d'observation. Cet autre dispositif optique nécessite une lame de section importante et donc de volume et de poids importants, à moins de réduire le champ d'observation.

Il est également connu par le document US-A-4 099 841 de réaliser un dispositif optique fait d'une lame épaisse à l'intérieur de laquelle sont disposés des volets successifs semi-réfléchissants ; l'observateur voit à travers les grandes faces de la lame ce qui se trouve normalement dans son champ visuel, et voit une image collimatée donnée par un faisceau lumineux qui pénètre par l'une des extrémités de la lame, se propage dans la lame sans réflexions sur les grandes faces et en ressort par une grande face après réfexion sur l'un des volets. L'obtention d'un champ correct, pour l'image collimatée nécessite une lame d'épaisseur importante ; il en résulte une lame de plus de deux litres et de plus de cinq kilogrammes, donc incompatible avec une utilisation en aéronautique.

La présente invention a pour but d'éviter ou, pour le moins, de réduire ces inconvénients. Ceci est obtenu, en particulier, en disposant des volets, constitués par des miroirs semi-réfléchissants successifs, parallèles, à l'intérieur d'un guide d'onde optique.

La présente invention a pour objet un dispositif optique pour l'introduction d'une image collimatée dans le champ visuel d'un observateur, de faibles dimensions, tel que défini, en particulier, par la revendication 1.

La présente invention sera mieux comprise et d'autres caractéristiques apparaîtront à l'aide de la description ci-après et des figures s'y rapportant qui représentent :
- la figure 1 une vue montrant un dispositif optique selon l'invention,
- les figures 2 à 4, des vues partielles montrant certaines parties du dispositif optique de la figure 1.

Sur les différentes figures les éléments correspondants sont désignés par les mêmes repères.

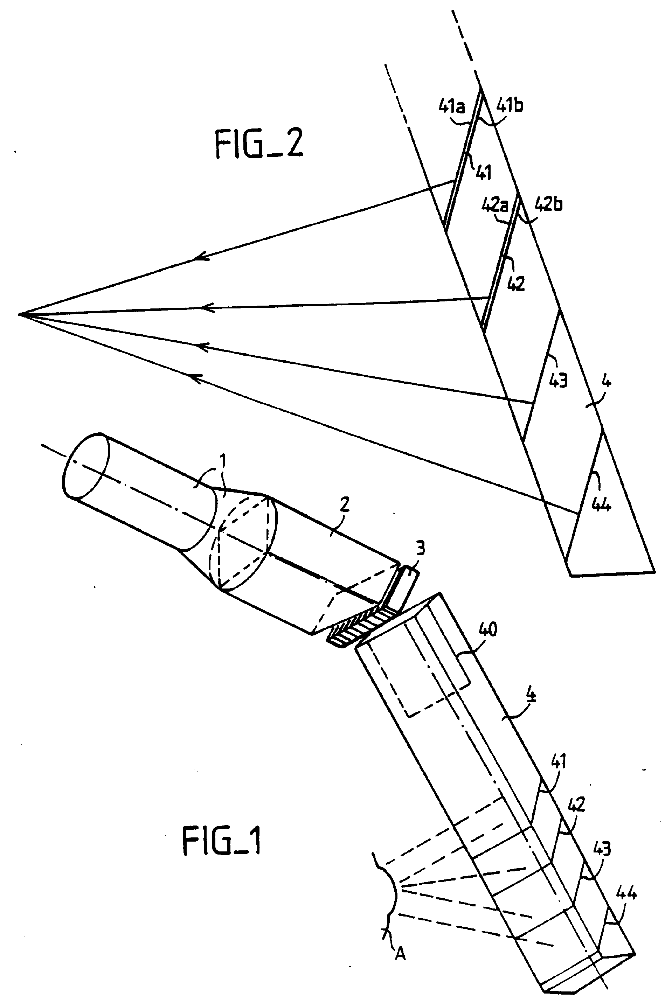

La figure 1 montre, en vue de dessus schématique, un dispositif optique selon l'invention, tel qu'il est placé par rapport à un observateur, A, dont n'apparaît, sur la figure, que l'oeil gauche. Un autre dispositif semblable, destiné à l'oeil droit de l'observateur, n'a pas été dessiné sur la figure de même que n'a pas été représenté le casque que porte l'observateur et sur lequel sont fixés les deux dispositifs optiques.

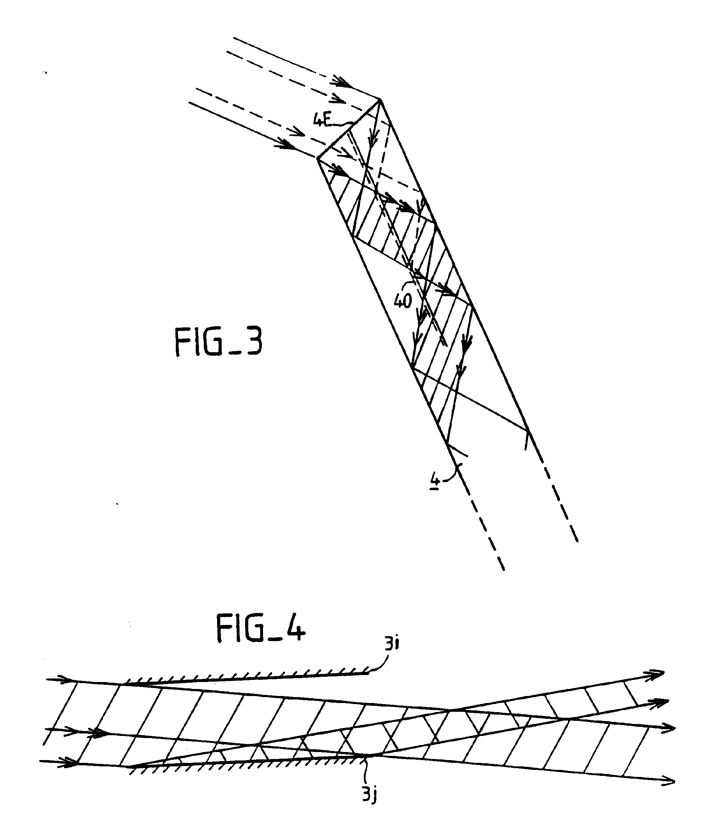

Le dispositif optique selon la figure 1 comporte un générateur d'image, 1, constitué par un ensemble muni d'un tube cathodique, une optique de collimation 2 pour mettre à l'infini l'image générée sur l'écran du tube cathodique, une galette de symétrisation, 3, dont le rôle sera précisé à l'aide de la figure 4 et une optique de combinaison avec une lame transparente 4 qui comporte des inclusions 40 à 44 que les figures 2 et 3 permettront de décrire avec plus de précision.

Les inclusions 40 à 44 comportent chacune un miroir semi-réfléchissant et l'observateur A peut regarder simultanément le paysage par transparence à travers les inclusions 41 à 44 et l'image produite par le générateur d'image 1, par réflexion sur les inclusions 41 à 44, qui seront appelées volets dans ce qui suit et dans les revendications. La lame 4 est une lame mince de section rectangulaire, à face parallèles, dont les deux grandes faces sont inclinées à 15° par rapport à la verticale quand la tête de l'observateur n'est inclinée ni vers le haut ni vers le bas. Corrélativement l'axe optique de l'optique de collimation et du tube cathodique, qui sont dans le prolongement l'un de l'autre, sont inclinés de 15 degrés vers le haut ; de plus l'axe principal du guide d'ondes optique que constitue la lame 4 est disposée obliquement par rapport à l'axe optique de l'optique de collimation 2 pour former un angle de 135 degrés. Le fonctionnement du dispositif optique de la figure 1 peut être sommairement décrit comme suit : le générateur d'image, 1, fournit une image sur l'écran de son tube cathodique ; l'optique de collimation, 2, en forme une image à l'infini ; la galette de symétrisation, 3, qui est une optique d'équipartition, crée une image symétrique par rapport à un plan horizontal ; la première inclusion, 40, répartit uniformément les rayons d'un même champ sur les volets 41 à 44 ; les volets 41 à 44 réfléchissent sélectivement les différents champs pour former une pupille d'observation éloignée du dispositif et dans laquelle l'oeil de l'observateur pourra apercevoir à la fois l'image fournie par le générateur 1 et le paysage placé devant lui.

La figure 2 montre, plus agrandie que sur la figure 1, la partie de la lame 4 munie des volets 41 à 44. Dans l'exemple décrit la lame 4 a une épaisseur de 7,5 mm entre ses deux grandes faces parallèles, les volets sont inclinés à 36 degrés par rapport aux grandes faces de la lame et les écarts entre les volets 41-42, 42-43 et 43-44 sont respectivement de 5,7 mm, 6,5 mm et 7 mm.

A l'intérieur de la lame 4 des rayons provenant du générateur 1 arrivent sous diverses incidences ; chaque incidence correspond à un point d'une image projetée à l'infini. Les volets, qui sont obtenus par découpage de la lame 4 et traitement des faces découpées, sont réfléchissants sous des bandes d'incidence dont la valeur moyenne diminue du volet 41 vers le volet 44 ; ainsi le premier volet, 41, est réfléchissant pour de fortes incidences correspondant au champ de gauche de l'image et le dernier volet est réfléchissant pour de faibles incidences correspondant au champ de droite de l'image.

Pour agrandir la pupille d'observation, c'est-à-dire la petite zone dans laquelle l'oeil, quand il s'y déplace, aperçoit correctement l'image, il est souhaitable que la réflexion ait lieu à cheval sur deux volets successifs et deux seulement afin de ne pas trop affaiblir la luminance de l'image. De plus chacun des deux premiers volets 41, 42 comporte, en série, un miroir semi-réfléchissant 41a, 42a et une lamelle demi-onde 41b, 42b, les autres volets ne comportant qu'un miroir semi-réfléchissant. Ces lamelles demi-onde améliorent la transmission du flux ; en effet les miroirs des deux premiers volets 41, 42 étant les plus polarisants à cause de l'incidence ne sont totalement réfléchissants que pour la polarisation perpendiculaire au plan d'incidence, c'est-à-dire au plan défini par un rayon qui arrive sur le miroir et la normale au plan du miroir au point d'arrivée du rayon sur le miroir ; grâce aux lamelles demi-onde la polarisation parallèle qui n'a pas été transmise par le volet 41 ou le volet 42 est transformée en polarisation perpendiculaire qui est réfléchie par le volet suivant ; ainsi, sans lamelles demi-onde et avec un coefficient de réflexion pris égal à O,5 pour la polarisation parallèle avec les volets 41 et 42, ces volets auraient transmis la polarisation parallèle de la partie d'image réfléchie à cheval sur eux deux avec des coefficients respectifs de 0,5 et 0,25, ce qui représente des valeurs nettement plus disparates et donc des luminances nettement plus différentes que, avec des lamelles demi- onde et en prenant, comme c'est le cas dans l'exemple décrit, un coefficient de réflexion de 0,3, donnant ainsi, au lieu de 0,5 et 0,25, 0,3 et 0,21 pour la transmission vers l'oeil, par les volets 41 et 42, de la polarisation parallèle relative à la même partie d'image.

Pour que le dispositif optique fonctionne dans de bonnes conditions il faut que chaque volet soit touché par l'ensemble des rayons incidents provenant de l'image fournie par le générateur d'images, or ce n'est normalement pas le cas ce qui entraîne la formation de raies dans l'image vue par l'observateur. Ce défaut est évité par l'inclusion 40 qui est un miroir semi-réfléchissant à large bande, de 20 mm de longueur, disposé en avant des volets, à mi-distance des grandes faces parallèles de la lame 4. La figure 3 montre l'extrémité de la lame 4 située du côté de la galette de symétrisation, avec sa face d'entrée 4E et un faisceau injecté dans la lame et provenant du générateur d'image. Les limites de ce faisceau ont été représentées sur la figure 3 par deux traits pleins, munis de flèches. Le faisceau, du fait de son angle d'incidence sur les grandes faces latérales de la lame 4, se propage dans la lame 4 par réflexions totales sur les grandes faces ; sur la figure 3, la zone non touchée par la partie du faisceau, qui se réfléchit uniquement sur les grandes faces latérales, a été hachurée ; c'est cette zone qui provoque la formation des raies mentionnées ci-avant. L'inclusion 40 constituée par le miroir semi-réfléchissant à large bande placé à mi-distance des deux grandes faces de la lame 4, fait disparaître ces zones comme le montre le tracé en traits interrompus munis de flèches correspondant à une partie du champ qui par des réflexions sur le miroir 40 vient combler la zone hachurée ; pour des raisons de clarté du dessin seule une partie des rayons qui permettent d'éviter les raies ci-avant mentionnées a été représentée sur la figure 3.

La galette de symétrisation, 3, est destinée à augmenter l'angle sous lequel l'oeil de l'observateur voit, par les volets 41-44, l'optique de collimation 2 de la figure 1. Sans cette galette il aurait fallu, dans l'exemple décrit, une optique de collimation de 60 mm de haut pour obtenir un champ vertical de 30 degrés ; avec la galette et en utilisant la réflexion sur la tranche de la lame 4 ou plus précisément sur la petite face latérale supérieure de la lame, il suffit d'une optique de 30 mm de haut. La galette de symétrisation 3, qui permet d'atteindre ce résultat, est constituée d'un empilement de miroirs, formant un parallélépipède rectangle d'une hauteur de 30 mm avec des miroirs rectangulaires de 10 mm sur 3 mm et un pas de 1 mm entre les faces réfléchissantes des miroirs ; les faces de ces miroirs sont disposées dans des plans parallèles aux petites faces latérales de la lame 4. Ainsi, comme le montre la figure 4, un champ qui rentre sous un angle a entre deux miroirs 3i, 3j de la galette 3, va donner, après avoir traversé la galette, des rayons directs, parallèles aux rayons d'entrée et des rayons symétrisés, et la proportion de rayons directs représentés avec une simple flèche sur la figure 4 et de rayons réfléchis est fonction de l'angle a. Les rayons directs seront alors vus par l'observateur comme s'il n'y avait pas eu la galette 3 tandis que les rayons symétrisés, qui ont été déviés vers le haut par les miroirs de la galette, seront vus par réflexion sur la tranche supérieure de la lame 4, cette tranche étant traitée pour former miroir ; la galette faisant subir une réflexion aux rayons symétrisés et la tranche supérieure réfléchissante leur faisant subir une réflexion supplémentaire, le nombre total de réflexions est pair et l'observateur voit, par les rayons symétrisés, une image droite et non pas inversée. Ainsi les rayons parallèles d'un même champ sont vus, non plus dans un angle de 15 degrés mais dans un angle de 30 degrés, c'est-à-dire dans l'angle sous lequel l'observateur voit la galette et l'image de la galette en réflexion sur la tranche supérieure réfléchissante de la lame 4.

La présente invention n'est pas limitée à l'exemple décrit ; c'est ainsi que, par exemple, lorsque les performances demandées au dispositif optique ne sont pas aussi grandes que celles du dispositif qui a servi à faire la présente description, il peut n'y avoir que trois ou deux volets successifs, ou bien il peut n'y avoir qu'un seul ou même aucun volet muni d'une lamelle demi-onde ou encore le miroir semi-réfléchissant 40 peut être supprimé, de même que la galette de symétrisation 3. Par contre il est aussi possible d'augmenter le nombre des volets au-delà de quatre afin de réduire encore l'épaisseur de la lame transparente 4 et, dans ce cas, le nombre de volets munis d'une lamelle demi-onde pourra être supérieur à deux, étant entendu que ces lamelles feront parties intégrantes des volets les plus proches de l'optique de collimation.

Il est également possible, et cela a été réalisé, d'utiliser des volets à miroirs semi-réfléchissant présentant le même coefficient de réflexion à condition de se limiter à deux miroirs.

## Revendications

1. Dispositif optique pour l'introduction d'une image collimatée dans le champ visuel d'un observateur (A), comportant, en série, un générateur d'image (1), une optique de collimation (2) et une optique de combinaison comportant une lame transparente (4), cette lame ayant une extrémité plane (4E) délimitée par deux grands côtés parallèles et formant un accès couplé optiquement à l'optique de collimation (2), deux grandes faces latérales planes et parallèles se terminant respectivement sur les deux grands côtés avec leur grande dimension orthogonale aux deux grands côtés et, entre les deux grandes faces, n, où n est un entier supérieur à 1, volets (41-44) successifs, parallèles, inclinés par rapport à la section droite de la lame c'est-à-dire par rapport à un plan perpendiculaire aux grandes faces et parallèle aux grands côtés, les volets comportant chacun un miroir semi-réfléchissant (41a, 42a, 43, 44) et étant disposés pour projeter sur le champ visuel de l'observateur une seule image composée, la lame étant disposée obliquement par rapport à l'optique de collimation c'est-à-dire avec un angle différent de zéro degré entre l'axe optique de l'optique de collimation et la grande dimension des grandes faces, caractérisé en ce que la disposition de l'optique de combinaison par rapport à l'optique de collimation est telle qu'un faisceau lumineux provenant de l'optique de collimation pénètre dans la lame en oblique par rapport aux grandes faces, assurant ainsi une propagation tout au long de la lame par réflexions totales sur les deux grandes faces.

2. Dispositif selon la revendication 1, caractérisé en ce que les miroirs semi-réfléchissants (41a, 42a, 43, 44) des volets (41-44) sont traités pour être réfléchissants sous des incidences de plus en plus faibles à mesure qu'ils sont plus éloignés de l'extrémité (4E) formant accès.

3. Dispositif selon la revendication 1, dans lequel n est égal à 2, caractérisé en ce que les deux miroirs semi-réfléchissants des deux volets ont le même coefficient de réflexion.

4. Dispositif selon l'une quelconque des revendications précédentes, caractérisé en ce que, parmi les n volets, les m, avec m entier supérieur à zéro et inférieur à n, volets (41, 42) les plus proches de l'extrémité (4E) formant accès comportent une lamelle demi-onde (41b, 42b) disposée derrière leur miroir semi-réfléchissant (41a, 42a) par rapport à l'extrémité formant accès.

5. Dispositif selon l'une quelconque des revendications précédentes, caractérisé en ce que, à l'intérieur de la lame (4), en avant des volets et à équidistance des grandes faces latérales, est disposé un miroir semi-réfléchissant (40).

6. Dispositif selon l'une quelconque des revendications précédentes, caractérisé en ce que la lame comporte, comme face longitudinale et en plus des deux grandes faces, une petite face latérale réfléchissante perpendiculaire aux deux grandes faces latérales et en ce que l'optique de collimation (2) est couplée optiquement à l'extrémité (4E) formant accès par une galette de symétrisation (3) constituée par un empilement de miroirs (31, 3j) dont les faces sont parallèles à la petite face latérale réfléchissante.

7. Casque pour observateur, caractérisé en ce qu'il est muni d'au moins un dispositif selon l'une des revendications précédentes.

## Patentansprüche

1. Optische Vorrichtung zum Einblenden eines kollimatierten Bilds in das Sichtfeld eines Betrachters (A), wobei die Vorrichtung in Reihe einen Bildgenerator (1), eine Kollimationsoptik (2) und eine Kombinationsoptik mit einem transparenten Plättchen (4) enthält, das eine von zwei großen parallelen Seiten begrenzte und einen an die Kollimationsoptik (2) optisch gekoppelten Zugang bildende Endfläche (4E) hat, wobei zwei große ebene und parallele Seitenflächen an den beiden großen Seiten mit ihrer großen, zu den beiden großen Seiten senkrechten Abmessung anstoßen, und mit n aufeinanderfolgenden halbreflektierenden Flächen (41 bis 44) zwischen den beiden großen Flächen, wobei n eine ganze Zahl größer 1 ist und diese Flächen parallel verlaufen und zur Querschnittsfläche des Plättchens, d.h. zu einer Ebene senkrecht zu den großen Flächen und parallel zu den großen Seiten geneigt verlaufen, wobei die halbreflektierenden Flächen je einen halbreflektierenden Spiegel (41a, 42a, 43, 44) besitzen und so angeordnet sind, daß sie ein einziges zusammengesetztes Bild in das Sichtfeld des Betrachters projizieren, wobei das Plättchen schräg bezüglich der Kollimationsoptik angeordnet ist, d.h. mit einem von Null verschiedenen Winkel zwischen der optischen Achse der Kollimationsoptik und der großen Abmessung der großen Flächen, dadurch gekennzeichnet, daß die Ausrichtung der Kombinationsoptik bezüglich der Kollimationsoptik so gewählt ist, daß ein von der Kollimationsoptik kommender Lichtstrahl in das Plättchen schräg bezüglich deren großen Flächen eindringt, so daß eine Fortpflanzung des Lichts entlang des Plättchens durch Totalreflexion an den beiden großen Flächen gewährleistet ist.

2. Vorrichtung nach Anspruch 1, dadurch gekennzeichnet, daß die halbreflektierenden Spiegel (41a, 42a, 43, 44) der halbreflektierenden Flächen (41 bis 44) so behandelt sind, daß sie unter umso kleineren Einfallswinkeln reflektieren, je weiter sie von der den Zugang bildenden Endfläche (4E) entfernt sind.

3. Vorrichtung nach Anspruch 1, in der n gleich 2 ist, dadurch gekennzeichnet, daß die beiden halbreflektierenden Spiegel der halbreflektierenden Flächen den gleichen Reflexionskoeffizienten besitzen.

4. Vorrichtung nach einem beliebigen der vorhergehenden Ansprüche, dadurch gekennzeichnet, daß unter den n halbreflektierenden Flächen die m Flächen (41, 44), die dem Zugangsende (4E) am nächsten liegen, eine Halbwellenlamelle (41b, 42b) enthalten, die hinter ihrem halbreflektierenden Spiegel (41a, 42a) bezüglich des den Zugang bildenden Endes liegt, wobei m eine ganze Zahl größer null und kleiner als n ist.

5. Vorrichtung nach einem beliebigen der vorhergehenden Ansprüche, dadurch gekennzeichnet, daß in dem Plättchen (4) vor den halbreflektierenden Flächen und in gleicher Entfernung von den beiden großen Seitenflächen ein halbreflektierender Spiegel (40) angeordnet ist.

6. Vorrichtung nach einem beliebigen der vorhergehenden Ansprüche, dadurch gekennzeichnet, daß das Plättchen als Längsfläche und zusätzlich zu den beiden großen Flächen eine kleine reflektierende Seitenfläche besitzt, die senkrecht zu den beiden großen Seitenflächen verläuft, und daß die Kollimationsoptik (2) optisch an das Zugangsende (4E) über eine Symmetrierleiste (3) gekoppelt ist, die von einem Stapel von Spiegeln (3i, 3j) gebildet wird, deren Spiegelflächen parallel zur kleinen reflektierenden Seitenfläche verläuft.

7. Helm für einen Betrachter, dadurch gekennzeichnet, daß er mindestens eine Vorrichtung nach einem der vorhergehenden Ansprüche enthält.

## Claims

1. Optical device for introducing a collimated image into the visual field of an observer (A), including, in series, an image generator (1), a collimating lens (2) and a combining lens including a transparent plate (4), this plate having a plane end (4E) delimited by two large parallel sides and forming an inlet coupled optically to the collimating lens (2), two large plane and parallel lateral faces terminating respectively on the two large sides with their large dimension orthogonal to the two large sides and, between the two large faces, n, where n is an integer greater than 1, successive, parallel flaps (41 - 44) inclined with respect to the cross-section of the plate, that is to say with respect to a plane perpendicular to the large faces and parallel to the large sides, the flaps each including a semi-reflective mirror (41a, 42a, 43, 44) and being arranged so as to project a single compound image onto the visual field of the observer, the plate being arranged obliquely with respect to the collimating lens, that is to say with an angle which differs from zero degrees between the optical axis of the collimating lens and the large dimension of the large faces, characterized in that the arrangement of the combining lens with respect to the collimating lens is such that a light beam coming from the collimating lens enters the plate obliquely with respect to the large faces, thus ensuring propagation right along the plate by total internal reflections on the two large faces.

2. Device according to Claim 1, characterized in that the semi-reflective mirrors (41a, 42a, 43, 44) of the flaps (41 - 44) are treated so as to be reflective under angles of incidence which become smaller and smaller the further they are removed from the inlet-forming end (4E).

3. Device according to Claim 1, in which n is equal to 2, characterized in that the two semi-reflective mirrors of the two flaps have the same coefficient of reflection.

4. Device according to any one of the preceding claims, characterized in that, among the n flaps, the m, with m an integer greater than zero and less than n, flaps (41, 42) closest to the inlet-forming end (4E) include a half-wave slat (41b, 42b) arranged behind their semi-reflective mirror (41a, 42a) with respect to the inlet-forming end.

5. Device according to any one of the preceding claims, characterized in that, inside the plate (4), ahead of the flaps and equidistant from the large lateral faces, is arranged a semi-reflective mirror (40).

6. Device according to any one of the preceding claims, characterized in that the plate includes, as longitudinal face and in addition to the two large faces, a small reflective lateral face perpendicular to the two large lateral faces and in that the collimating lens (2) is coupled optically to the inlet-forming end (4E) by a symmetrizing pad (3) consisting of a stack of mirrors (3i, 3j), the faces of which are parallel to the small reflective lateral face.

7. Helmet for observer, characterized in that it is fitted with at least one device according to one of the preceding claims.
